# DEMANDE DE BREVET EUROPEEN

(11) **EP 1 129 964 A1**
(43) Date de publication de la demande: **05.09.2001**
(21) Numéro de dépôt: 01460015.9
(22) Date de dépôt: 27.02.2001
(51) Int. Cl.: B65D 85/32, B29C 51/34

(54) **Outillage destiné à fabriquer un couvercle d'un emballage et emballage obtenu**

(30) Priorité: 01.03.2000 FR 0002591
(71) Demandeur: Les Cartonnages Gourio SA, 22120 Pommeret (FR)
(72) Inventeur: Gourio, Yves, 22400 Morieux (FR)
(74) Mandataire: Maillet, Alain

(57) **Abrégé**

La présente invention concerne un outillage (300) destiné à fabriquer un couvercle (200) d'un emballage prévu pour empaqueter des oeufs, l'emballage étant constitué en outre d'un contenant (100), le couvercle (200) pouvant s'assembler au contenant (100) par au moins un plot (260) pouvant se loger dans un orifice (134) formé dans ledit contenant (100), ledit outillage (300) comportant au moins une portion conique (360) destinée à permettre respectivement la réalisation par thermoformage d'un plot (260) dudit couvercle (200).

L'invention est remarquable en ce que la portion conique (360) est rainurée dans un plan médian et comporte dans ce volume libre au moins un doigt escamotable (370a, 370b) présentant une excroissance (372) destinée à former un ergot (264) à la périphérie dudit plot (260).

L'invention concerne également l'emballage destiné à empaqueter des oeufs et le couvercle amovible pour cet emballage.

## Description

La présente invention concerne un emballage destiné à empaqueter des oeufs, dont le couvercle est constitué d'une paroi mince thermoformée, conformée de manière à recouvrir des oeufs disposés dans un contenant de l'emballage.

Les emballages pour oeufs comportent généralement un contenant prévu pour recevoir des oeufs posés respectivement dans des alvéoles dudit contenant, ainsi qu'un couvercle destiné à recouvrir les oeufs. Le contenant et le couvercle sont conçus de manière à éviter que les oeufs ne s'entrechoquent dans l'emballage et ne se cassent pendant le transport ou la manutention de l'emballage. Le contenant et le couvercle sont également étudiés pour absorber les chocs qu'ils peuvent subir afin de protéger de la casse lesdits oeufs dans les mêmes conditions.

Il importe donc que le contenant et le couvercle demeurent solidaires l'un de l'autre lors de ces opérations de transport et de manutention.

Pour y parvenir, une solution consiste à prévoir dans le couvercle au moins un plot disposé à l'extrémité d'un cône prévu pour se positionner entre et au-dessus des alvéoles du contenant. Ce plot peut s'enficher dans un orifice réalisé dans une protubérance formée à l'intersection des alvéoles du contenant. Un assemblage entre le couvercle et le contenant peut ainsi être réalisé comme cela est montré par exemple dans le brevet FR-A-2 418 754.

Cependant, compte tenu du mode de réalisation du couvercle, fabriqué par thermoformage, le plot a une forme conique et s'assemble par coincement dans l'orifice. Il en résulte que la tenue de l'assemblage du couvercle avec le contenant est fonction de l'effort d'insertion du plot dans l'orifice. Par conséquent, si le plot est faiblement enfoncé dans l'orifice, le couvercle peut facilement se séparer du contenant. L'emballage ne protège alors plus correctement les oeufs qu'il contient.

Le but de l'invention est donc de proposer un emballage destiné à empaqueter des oeufs dont le couvercle, fabriqué par thermoformage, puisse s'assembler à un contenant de l'emballage par des moyens d'assemblage procurant une tenue de l'assemblage qui n'est pas fonction de l'effort d'assemblage du couvercle au contenant.

A cet effet, l'emballage prévu pour empaqueter des oeufs, constitué d'un contenant et d'un couvercle pouvant s'assembler au contenant par au moins un plot pouvant se loger dans un orifice formé dans ledit contenant, est remarquable en ce qu'au moins un ergot est formé en contre-dépouille sur ledit plot.

Ainsi, la tenue de l'assemblage du couvercle au contenant n'est pas fonction de l'effort d'assemblage du couvercle au contenant.

Selon une autre caractéristique de l'invention, l'ergot comporte un redan.

Selon une autre caractéristique de l'invention, les ergots sont répartis de manière symétrique autour d'un plot.

Selon une autre caractéristique de l'invention, l'emballage dont le couvercle comporte des parois et un fond, est remarquable en ce que les parties médianes des parois et du fond comportent des zones planes de manière à permettre d'y apposer une étiquette de signalisation.

Selon une autre caractéristique de l'invention, l'emballage dont le couvercle comporte des renfoncements formés sur les parois et dont le contenant comporte des supports prolongeant les côtés principaux dudit contenant, est remarquable en ce que des renfoncements comportent des tétons prévus pour se loger respectivement dans des trous formés dans des supports.

La présente invention concerne également un couvercle destiné à recouvrir un contenant d'un emballage prévu pour empaqueter des oeufs, tel qu'il vient d'être décrit.

La présente invention concerne aussi un outillage permettant de réaliser un couvercle pour emballage prévu pour empaqueter des oeufs et qui comporte au moins un plot muni d'au moins un ergot tel qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un emballage destiné à empaqueter des oeufs, comportant un couvercle selon l'invention,
la Fig. 2 représente une vue en coupe d'un couvercle assemblé sur un contenant d'un emballage selon l'invention,
la Fig. 3 représente une vue partielle en coupe d'un outillage permettant le thermoformage d'un plot d'un couvercle d'un emballage selon l'invention,
la Fig. 4 représente une vue partielle en coupe d'un couvercle thermoformé sur un outillage selon l'invention, et
la Fig. 5 représente une vue partielle en coupe d'un couvercle thermoformé lors de sa séparation à un outillage selon l'invention.

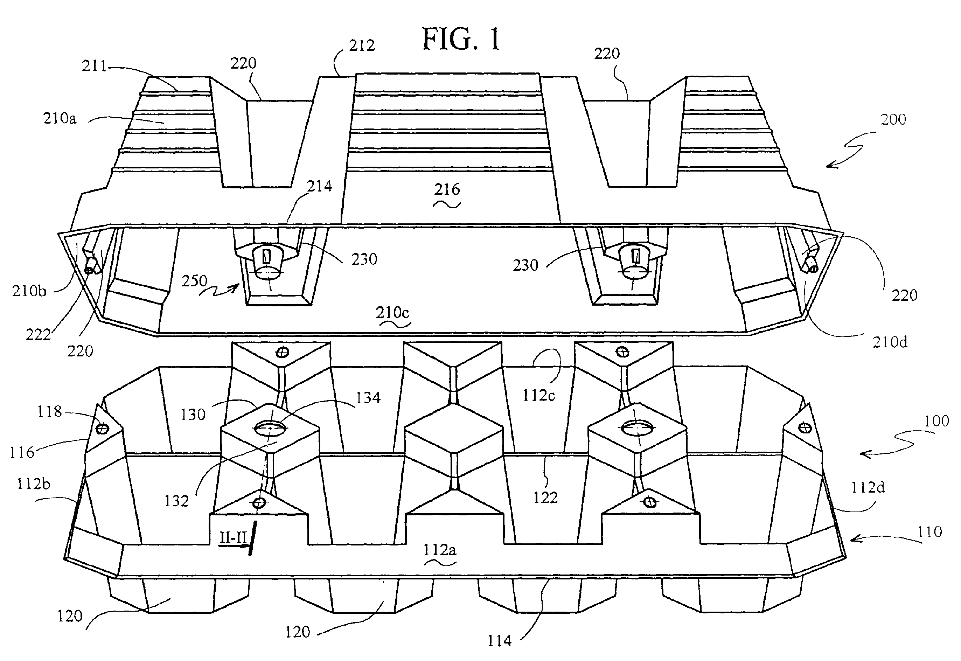

L'emballage destiné à empaqueter des oeufs représenté à la Fig. 1 est constitué d'un contenant 100 sur lequel peut être assemblé un couvercle 200.

Le contenant 100 est réalisé dans un matériau d'épaisseur constante, par exemple en carton de cellulose moulée, et comprend une embase 110 délimitée latéralement par quatre côtés principaux 112a-d. Les côtés principaux 112a-d sont bordés par un rebord 114 formant une ceinture autour de l'embase 110.

Des alvéoles 120 sont formées dans l'embase 110 sur deux rangées parallèles. Le nombre d'alvéoles est égal à un nombre pair compris entre deux et douze. A cette Fig., l'emballage représenté en comporte huit. Chacune de ces alvéoles 120 a la forme d'un tronc de pyramide pouvant loger un oeuf sur une partie de sa hauteur. Deux alvéoles 120 voisines sont séparées l'une de l'autre par des barrettes 122 permettant d'écarter une alvéole 120 de l'autre afin qu'un oeuf qui y est logé ne puisse entrer en contact avec son voisin.

Des supports 116 prolongent entre deux alvéoles 120, les côtés principaux 112a-d.

Des trous 118 sont respectivement formés dans des supports 116.

Dans l'embase 110 est également prévue au moins une protubérance 130 disposée à l'intersection de quatre alvéoles 120. A la Fig. 1, on dénombre trois protubérances 130. Les protubérances 130 sont formées dans une direction opposée à celle des alvéoles 120. Chaque protubérance 130 est tronquée à son sommet par une facette 132 disposée dans un plan sensiblement parallèle au plan défini par le rebord 114 de l'embase 110.

Dans au moins une facette 132 d'une protubérance 130 est réalisé un orifice 134 destiné à recevoir un moyen d'assemblage 250 réalisé dans le couvercle 200.

Le couvercle 200 représenté à la Fig. 1 est fabriqué par thermoformage dans une feuille de matière plastique thermoformable dont l'épaisseur est constante. Il est destiné à recouvrir le contenant 100 et à s'assembler avec lui.

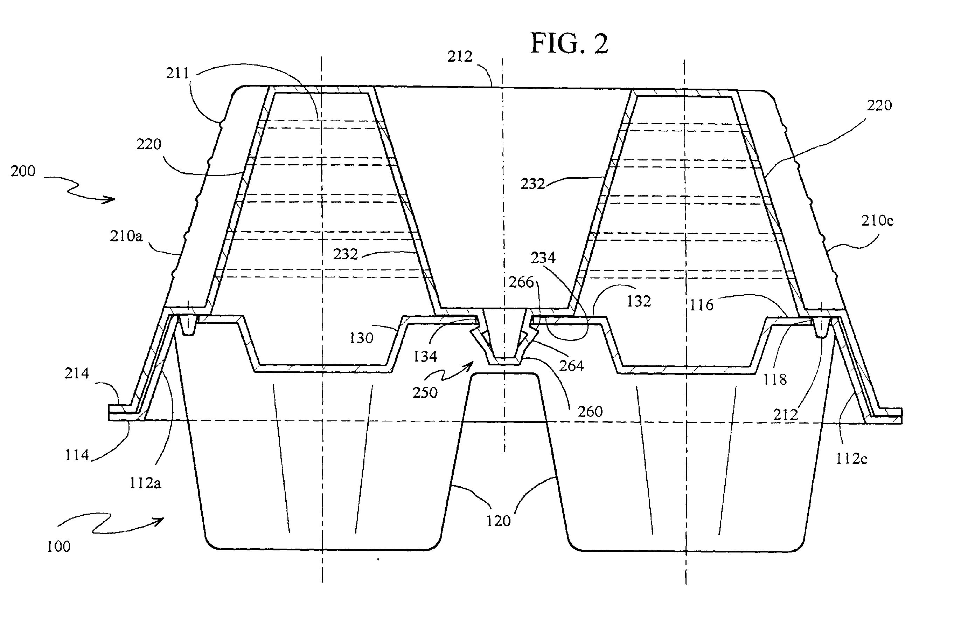

Le couvercle 200 comprend quatre parois 210a-d planes et convergentes entre elles et réunies par un fond 212. Les bords libres des parois 210a-d sont terminés par une bordure 214 formant une ceinture autour du couvercle 200. Les parois 210a-d sont destinées respectivement à chevaucher les côtés principaux 112a-d du contenant 100 de manière à permettre le positionnement correct du couvercle 200 au contenant 100 lorsque le couvercle 200 recouvre ledit contenant 100, comme cela est représenté à la Fig. 2.

Des godrons 211 sont formés longitudinalement sur chacune des parois 210a-d. Ces godrons 211 permettent de rigidifier lesdites parois 210a-d afin de réduire la déformation sous charge de l'emballage, par exemple lorsque les emballages sont empilés.

A cette Fig. 2, seules les parois 210a, 210c, ainsi que les côtés principaux 112a et 112e sont visibles. La bordure 214 permet quant à elle de limiter l'emboîtement du couvercle 200 sur le contenant 100 lorsqu'elle entre en contact avec le rebord 114 dudit contenant 100.

Les parois 210a, 210c ou le fond 212 présentent dans leurs parties médianes des zones planes 216, visibles uniquement à la Fig. 1, qui permettent d'y apposer une étiquette de signalisation non représentée, destinée à présenter au consommateur des informations relatives aux produits contenus dans l'emballage.

Des renfoncements 220 visibles aux Fig. 1 et 2 sont formés sur les parois 210a-d. Ils sont prévus pour maintenir en position des oeufs logés dans les alvéoles 120 lorsque le couvercle 200 recouvre le contenant 100. En particulier, chaque renfoncement 220 entre en contact avec un point de la coquille d'un oeuf dans sa partie émergente d'une alvéole 120 lorsque cet oeuf est logé dans ladite alvéole 120.

L'ensemble de ces renfoncements 220 ou certains d'entre eux comportent respectivement des tétons 222. Ceux-ci sont prévus pour se loger respectivement dans les trous 118 des supports 116 pour permettre de réduire la déformation sous charge de l'emballage, par exemple lorsque les emballages sont empilés.

Des troncs de pyramide 230 sont formés dans le fond 212. Deux troncs de pyramide 230 sont représentés à la Fig. 1. Ils sont dirigés vers la partie interne du couvercle 200.

Les troncs de pyramide 230 sont positionnés dans un plan médian du couvercle 200, à mi-distance de deux renfoncements 220 se faisant face, de telle sorte qu'ils se trouvent positionnés respectivement dans le prolongement des protubérances 130 du contenant 100.

La hauteur de chaque tronc de pyramide 230 est telle que la petite base formant une face d'appui 234 repose sur la facette 132 du contenant 100 lorsque le couvercle 200 est assemblé au contenant 100, comme cela apparaît à la Fig. 2.

Chacun tronc de pyramide 230 est pourvu de faces 232 permettant également de maintenir en position des oeufs logés dans les alvéoles 120 de la même manière que les renfoncements 220.

Au moins un tronc de pyramide 230 est pourvu sur sa face d'appui 234 d'un moyen d'assemblage 250 permettant la fixation du couvercle 200 dans un orifice 134 du contenant 100. A la Fig. 1, deux moyens d'assemblage 250 sont disposés respectivement sur les troncs de pyramide 230 latéraux du couvercle 200.

A la Fig. 2, chaque moyen d'assemblage 250 est constitué d'un plot 260 ayant la forme d'un tronc de cône dont le plus grand diamètre est sensiblement égal au diamètre d'un orifice 134. Chaque plot 260 est également pourvu d'au moins un ergot 264 comportant un redan 266.

Ainsi, lorsque le plot 260 est présenté dans l'orifice 134, c'est-à-dire, lorsque l'on recouvre un contenant 100 par un couvercle 200 pour les solidariser l'un à l'autre, l'ergot 264 se déforme de façon élastique et traverse ledit orifice 134 de manière à ce que le redan 266 puisse se bloquer sur la face interne de la facette 132 du contenant 100. Le couvercle 200 est alors fixé au contenant 100.

Lorsque l'on souhaite désolidariser le couvercle 200 du contenant 100, c'est-à-dire en voulant les séparer l'un de l'autre, l'ergot 264 se déforme de façon élastique une nouvelle fois et le redan 266 peut être sorti de l'orifice 134. Le plot 260 peut alors être extrait de l'orifice 134, et le couvercle 200 séparé du contenant 100.

Lors de la solidarisation ou de la désolidarisation du couvercle 200 au contenant 100, une déformation élastique de l'orifice 134 du contenant peut être également constatée.

La fixation du couvercle au contenant est réversible. La tenue de l'assemblage du couvercle au contenant n'est pas fonction de l'effort nécessaire à leur assemblage.

L'assemblage du couvercle au contenant nécessite un effort plus réduit que celui d'un assemblage conventionnel.

Un bruit caractéristique est également émis lorsque le couvercle est assemblé correctement au contenant, ce qui permet de s'assurer que le couvercle est fixé correctement au contenant.

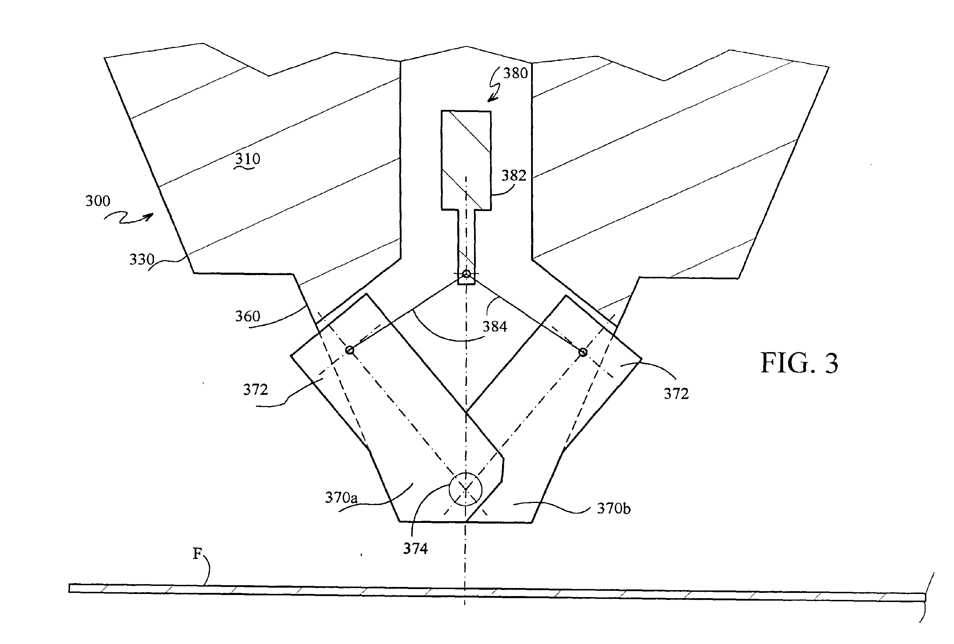

A la Fig. 3, un outillage 300 permettant de réaliser un couvercle 200 d'un emballage destiné à empaqueter des oeufs selon l'invention est partiellement représenté. Est en particulier représentée, la partie de l'outillage 300 permettant la réalisation d'un tronc de pyramide 230 prolongé par un plot 260 muni d'au moins un ergot 264 dudit couvercle 200.

Pour former un couvercle 200 selon l'invention, on utilise une feuille de matière plastique thermoformable F qui est conformée sur l'outillage 300 par thermoformage sur celui-ci. De préférence, la feuille de matière plastique thermoformable F est plaquée sur l'outillage 300 par un système d'aspiration non représenté aux Figs. 3 à 5.

L'outillage 300 comporte une matrice fixe 310 constituée notamment d'une portion pyramidale 330 prolongée par une portion conique 360 destinée à former respectivement un tronc de pyramide 230 prolongé par un plot 260 dudit couvercle 200.

La portion conique 360 est rainurée dans un plan médian et comporte dans ce volume libre au moins un doigt escamotable 370. A la Fig. 3, deux doigts escamotables 370a et 370b sont représentés et sont disposés de façon symétrique dans le plan médian de la portion conique 360.

Chacun des doigts escamotables 370a ou 370b comporte une excroissance 372 destinée à former un ergot 264 d'un couvercle 200.

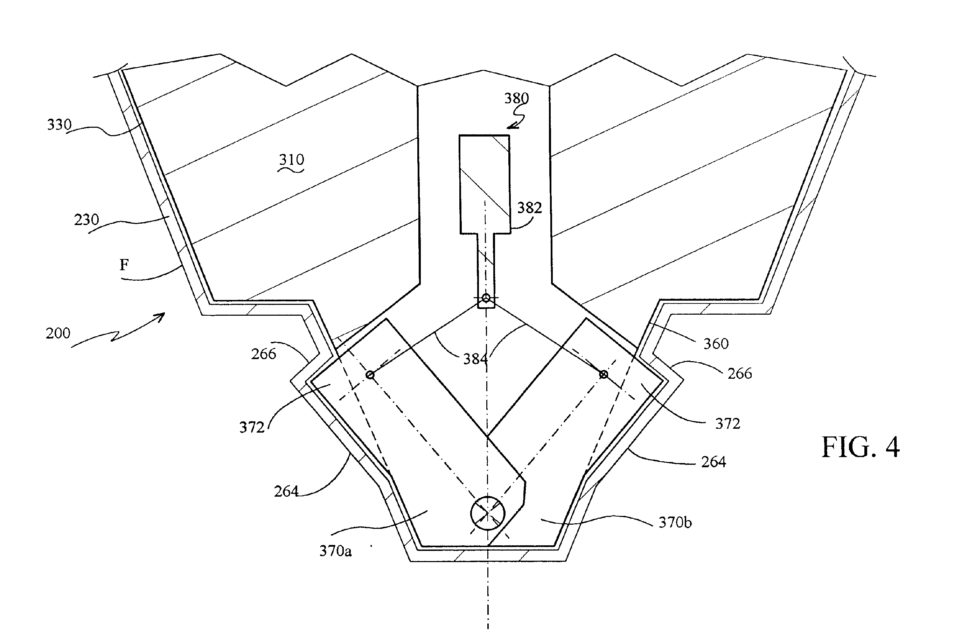

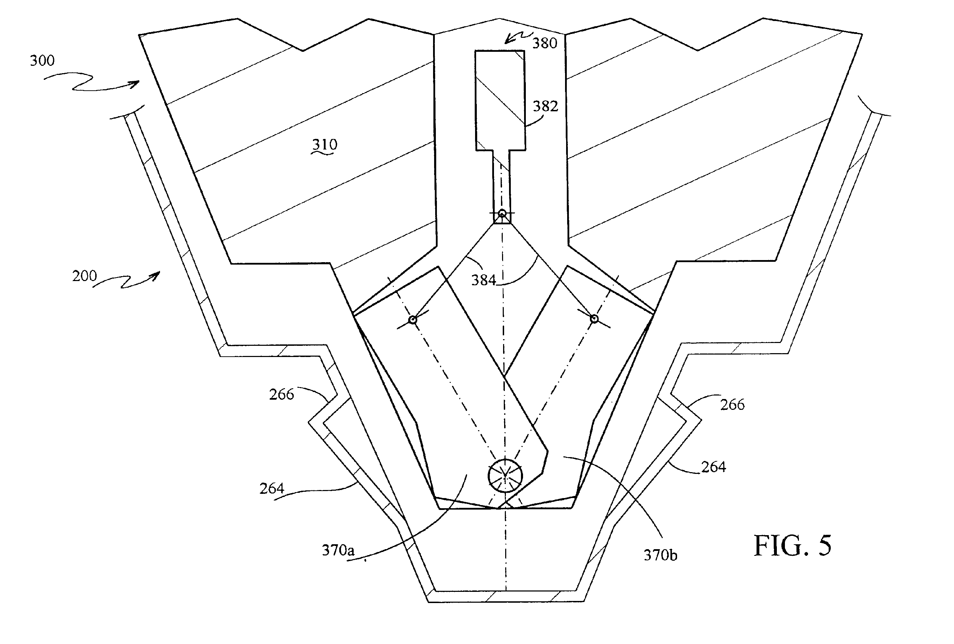

Les doigts escamotables 370a et 370b sont articulés autour d'un axe 374 disposé dans un plan médian de la portion conique 360 et à proximité de sa face d'extrémité libre. Les doigts escamotables 370a et 370b peuvent ainsi être rendus mobiles par un dispositif de manoeuvre 380, entre deux positions ouverte ou fermée où ils sont respectivement, soit proéminents à la portion conique 360 par leurs excroissances 372, comme cela apparaît aux Fig. 3 et 4, soit escamotés dans celle-ci, tel que cela est représenté à la Fig. 5.

Le dispositif de manoeuvre 380 est constitué, par exemple, par un vérin 382 agissant respectivement sur les doigts escamotables 370a et 370b par l'intermédiaire d'une biellette 384.

A la Fig. 4, les doigts escamotables 370a et 370b de l'outillage 300 sont positionnés en position ouverte. Une feuille de matière plastique thermoformable F est conformée sur l'outillage 300 par thermoformage pour former un couvercle 200. La feuille de matière plastique thermoformable F épouse pour ce faire l'enveloppe externe formée par la portion pyramidale 330, la portion conique 360 et les excroissances 372 de la matrice fixe 310. Chaque excroissance 372 forme ainsi en contre-dépouille un ergot 264 et son redan 266 du couvercle 200.

A la Fig. 5, les doigts escamotables 370a et 370b de l'outillage 300 sont positionnés en position fermée. Il est alors possible de séparer le couvercle 200 de l'outillage 300 sans que les ergots 264 et leurs redans respectifs 266 formés en contre-dépouille y fassent obstacle.

## Revendications

1. Outillage (300) destiné à fabriquer un couvercle (200) d'un emballage prévu pour empaqueter des oeufs, l'emballage étant constitué en outre d'un contenant (100), le couvercle (200) pouvant s'assembler au contenant (100) par au moins un plot (260) pouvant se loger dans un orifice (134) formé dans ledit contenant (100), ledit outillage (300) comportant au moins une portion conique (360) destinée à permettre respectivement la réalisation par thermoformage d'un plot (260) dudit couvercle (200), **caractérisé en ce que** la portion conique (360) est rainurée dans un plan médian et comporte dans ce volume libre au moins un doigt escamotable (370a, 370b) présentant une excroissance (372) destinée à former un ergot (264) à la périphérie dudit plot (260).

2. Outillage (300) selon la revendication 1, **caractérisé en ce que** les doigts escamotables (370a, 370b) sont disposés de façon symétrique autour de la portion conique (360).

3. Outillage (300) selon la revendication 1 ou 2, **caractérisé en ce que** chaque doigt escamotable (370a, 370b) peut prendre toutes les positions entre une position dite ouverte où chaque excroissance (372) est en proéminence de la portion conique (360) et une position dite fermée où chaque excroissance (372) est escamotée dans ladite portion conique (360).

4. Outillage (300) selon la revendication 3, **caractérisé en ce que** chaque doigt escamotable (370a, 370b) peut être déplacé entre sa position ouverte et sa position fermée par un dispositif de manoeuvre (380) agissant sur ledit doigt escamotable par une biellette (384).

5. Couvercle (200) amovible fabriqué par thermoformage destiné à recouvrir un contenant (100) d'un emballage prévu pour empaqueter des oeufs, ledit couvercle (200) pouvant s'assembler au contenant (100) d'un emballage par au moins un plot (260) pouvant se loger dans un orifice (134 formé dans ledit contenant (100), **caractérisé en ce qu**'il est fabriqué par un outillage selon l'une des revendication 1 à 4.

6. Couvercle (200) selon la revendication 5, le couvercle (200) comportant des parois (210a-210d) et un fond (212), **caractérisé en ce que** les parties médianes des parois (210a-210d) et du fond (212) comportent des zones planes (216) de manière à permettre d'y apposer une étiquette de signalisation.

7. Couvercle (200) selon la revendication 6, **caractérisé en ce que** le couvercle (200) comporte des renfoncements (220) formés sur les parois (210a-210d), les renfoncements (220) comportant des tétons (222) prévus pour se loger respectivement dans des trous (118) formés dans des supports (116) du contenant (100).

8. Couvercle (200), selon l'une des revendications 6 ou 7, **caractérisé en ce que** des godrons (211) sont formés longitudinalement sur chacune des parois (210a-d).

9. Emballage prévu pour empaqueter des oeufs, constitué d'un contenant (100) et d'un couvercle (200) pouvant s'assembler au contenant (100) par au moins un plot (260) pouvant se loger dans un orifice (134) formé dans ledit contenant (100), **caractérisé en ce qu**'il est fabriqué par un outillage selon l'une des revendications 1 à 4.

10. Emballage selon la revendication 9, dont le couvercle (200) comporte des parois (210a-210d) et un fond (212), **caractérisé en ce que** les parties médianes des parois (210a-210d) et du fond (212) comportent des zones planes (216) de manière à permettre d'y apposer une étiquette de signalisation.

11. Emballage selon la revendication 10, dont le couvercle (200) comporte des renfoncements (220) formés sur les parois (210a-210d) et dont le contenant (100) comporte des supports (116) prolongeant les côtés principaux (112a-d) dudit contenant (100), **caractérisé en ce que** des renfoncements (220) comportent des tétons (222) prévus pour se loger respectivement dans des trous (118) formés dans des supports (116).
